# EUROPEAN PATENT APPLICATION

(11) **EP 3 736 529 A1**
(43) Date of publication of application: **11.11.2020**
(21) Application number: 20382262.2
(22) Date of filing: 01.04.2020
(51) Int. Cl.: G01B 21/04, G01C 11/02, G01B 11/00, G01C 15/00, G01S 17/42, G01S 17/66

(54) **INSTALLATION FOR MEASURING HIGH RANGE INDUSTRIAL PARTS**

(30) Priority: 14.03.2019 ES 201930418 U
(71) Applicant: Ideko, S.Coop., 20870 Elgoibar Guipuzcoa (ES)
(72) Inventor: MENDICUTE GARATE, Alberto, 20870 ELGOIBAR (GIPUZKOA) (ES); HERRERA ASTEASU, Imanol, 20870 ELGOIBAR (GIPUZKOA) (ES)
(74) Representative: Plasseraud IP

(57) **Abstract**

The present invention is related to an installation for measuring high range industrial parts, comprising a part (1) to be measured, this part (1) having measurement points (2), a measurement instrument (3) to obtain information about the measurement points (2), a first display screen (4), where the information obtained by means of the measurement instrument (3) is represented, and a second display screen (5) that is portable and that is connected to the first display screen (4), in such a way that a user measuring the part (1) and carrying said second display screen (5) with him has the information shown on the first display screen (4) at his disposal and in real time.

## Description

### Technical field

The present invention is related to an installation for measuring high range industrial parts; in other words, parts of a considerable size, of more than 10 metres in length, by means of measuring systems such as photogrammetry or the laser tracker, said installation comprising a portable device that enables the user to see the information obtained during measuring thus far without having to move from the point where he is located.

### State of the art

In industrial environments, there is a need to measure and align industrial parts that are considered high range, which are those that are large in size, such as parts over 10 metres in length. For example, in high range parts to be machined, the measurement and alignment of the previous part is necessary, among other things, to:
- ensure that there is sufficient material offset on all surfaces to be machined,
- calculate the rough alignment of the part for an optimal distribution of material offset, and
- place and adjust the part in the machine.

Different measuring systems, such as photogrammetry or laser tracker, can be used to measure and align this type of part. In these measuring systems, the high range part comprises measurement points, from which a user progressively obtains information by means of a measurement instrument. To carry out the measurement, the user has to move around the entire part to obtain information about all the measurement points, which will be used to finally obtain the specific measurements of the high range part.

In conventional installations for measuring high range industrial parts, while information about the different measurement points is obtained, the information obtained by means of the measurement instrument is shown in real time on a display screen of a computer which is fixed on a particular point, such that the user can see and check said information obtained by means of the measurement instrument.

In high range parts, however, the user must move around the entire part to carry out the measurement and, in order to see the information being obtained, he needs to move from where the information about the last measurement points was obtained to the place where the display screen is located, then having to go back to the point where the information about the last measurement points had been obtained to continue measuring, which entails a significant waste of time.

This problem is aggravated depending on the size of the part, since in certain cases the user who performs the measurement must climb onto cranes, scaffolding or other similar elements in order to obtain information about all the measurement points of the high range part. Therefore, the time wasted in getting off said elements to look at the display screen and then return to the previous point to continue measuring is even greater.

In view of the problems described in installations for measuring high range industrial parts, a solution is necessary that provides a way to check the information obtained from the measurement points of the part in real time by means of the measurement instrument, without the user having to move from the place where the measurement is being carried out.

### Object of the invention

According to the present invention, an installation for measuring high range industrial parts is proposed, which solves the drawbacks and limitations of installations of this type that exist today, since it enables a user to check information obtained from a part to be measured in real time without the user having to move from the place where he is carrying out the measurement.

This installation for measuring high range industrial parts object of the invention comprises a part that is to be measured and which has measurement points, a measurement instrument to obtain information about the measurement points, a first display screen where the information obtained by means of the measurement instrument is represented, and a second display screen that is portable and that is connected to the first display screen, so that a user measuring the part and carrying said second display screen with him has the information shown on the first display screen constantly at his disposal and in real time by means of the second display screen.

In this way, it prevents the user who is measuring the part from having to move from the point where he is located to the point where the first display screen is located when he wants to check the information obtained thus far, since the user can see all the information available on the first display screen by means of the second display screen, which he can carry himself since it is portable.

Furthermore, the second display screen is wirelessly connected to the first display screen. In this way, as neither of the elements is connected by wiring, the user is totally free to carry the second display screen.

Likewise, the second display screen comprises fastening means that enable the second display screen to be coupled to the user measuring the part, such that the user can couple the second display screen to his arm or to another body part, and thus have the information shown on said second display screen at his disposal without this element conditioning or disturbing him while measuring the part.

Furthermore, the second display screen forms part of a common electronic device, such as a mobile phone, a Tablet or a PDA, so that the inclusion and connection thereof to the rest of the elements of the installation for measuring high range industrial parts may be simpler.

For all these reasons, the installation for measuring high range industrial parts has constructive and functional features that make it advantageous, taking on a life of its own and preferred character with respect to conventional installations of this type.

### Description of the figures

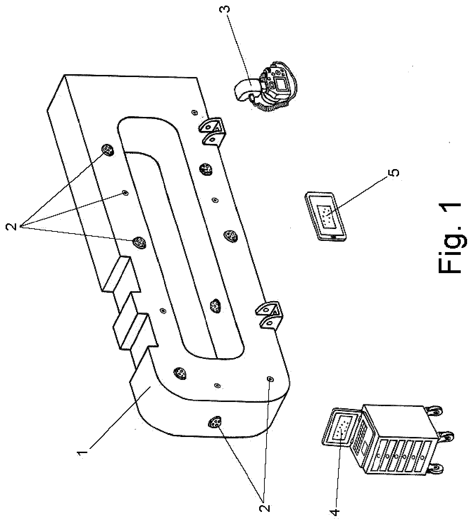

Figure 1 shows a schematic view of an installation for measuring high range industrial parts object of the invention, where photogrammetry is used as a measuring system for industrial parts.

### Detailed description of the invention

The object of the invention relates to an installation for measuring high range industrial parts; in other words, parts of a considerable size, of more than 10 metres in length.

To measure and align this type of part, measuring systems are used in which a high range part (1) has measurement points (2), about which a user, with the intention of measuring the part (1), progressively obtains information by means of a measurement instrument (3), the user having to move around the entire part (1) to obtain information about all the measurement points (2), which will be used to finally obtain the exact measurement of the high range part (1).

While information is obtained regarding the different measurement points (2), the information obtained by means of the measurement instrument (3) is displayed on a first display screen (4) of a computer in real time, such that the user can see and check said obtained information. Said computer, together with the first display screen (4), is fixed on a specific point of the installation.

The installation comprises a second display screen (5) that is portable and that is connected to the first display screen (4), such that on said second display screen (5) the information present on the first display screen (4) is shown in real time.

In this way, it prevents the user who is obtaining the information about the measurement points (2) by means of the measurement instrument (3) from having to move from the point where he is measuring to the point where the first display screen (4) is located when he wants to check the information obtained thus far, since the user can see all the information available on the first display screen (4) by means of the second display screen (5) which he can carry himself since it is portable.

Similarly, it obviously further prevents the user from having to return from the point where the first display screen (4) is located to the point where he had stopped obtaining information about the measurement points (2) of the part (1) to continue measuring.

All this entails significant time savings and greater comfort when using the installation, since in high range industrial parts distances are considerable and there are even cases in which the user who wishes to measure the part (1) must climb onto a crane or scaffold.

Preferably, the connection between the first display screen (4) and the second display screen (5) is made wirelessly, such that the user is totally free to carry the second display screen (5), which he could not do if the first display screen (4) and the second display screen (5) were connected by wiring.

Likewise, preferably, the second display screen (5) comprises fastening means that enable said second display screen (5) to be coupled to the user carrying out the measurement. For example, the user can couple, by means of said fastening means, the second display screen (5) to his arm, such that this element does not disturb or condition him while he measures.

More preferably, the second display screen (5) forms part of a common electronic device, such as a mobile phone, a Tablet or a PDA.

When the measuring system used in the installation for measuring high range industrial parts is photogrammetry (as seen in Figure 1), the measurement points (2) are elements that are arranged on the part (1) to be measured, such as optical markers.

Likewise, in this case, the measurement instrument (3) corresponds to a photographic camera especially designed to take photographs of the part (1) to be measured, such that information about the measurement points (2) of said part (1) is obtained in each photograph. Said photographic camera sends the information obtained by means of the different photographs taken to the computer comprising the first display screen (4), which comprises software that calculates the measurements of the part (1) by means of the information obtained by means of the different photographs taken.

Furthermore, when the measuring system used in the installation to measure high range industrial parts is the laser tracker, the measurement points (2) correspond to points on the part (1) whereon the user places an optical element that is followed by a laser, which in this case corresponds to the measurement instrument (3). In this way, the user places the optical element on different measurement points (2) of the part and the laser obtains information about the location of each measurement point (2).

The laser sends the information obtained at each measurement point (2) to the computer comprising the first display screen (4), which has software that calculates the measurements of the part (1) by means of the information sent by the laser.

It must be taken into consideration that the use of the aforementioned measuring systems in the installation object of the invention is not limiting, since it is possible to use any other measuring system comprising a measurement instrument (3) that obtains information regarding measurement points (2) of a high range industrial part (1) which is to be measured.

## Claims

1. An installation for measuring high range industrial parts, comprising:
• a part (1) to be measured, this part (1) having measurement points (2),
• a measurement instrument (3) to obtain information about the measurement points (2),
• a first display screen (4) where the information obtained by means of the measurement instrument (3) is represented,
**characterised in that** it comprises a second display screen (5) that is portable and that is connected to the first display screen (4), in such a way that a user measuring the part (1) and carrying said second display screen (5) with him, has the information shown on the first display screen (4) at his disposal and in real time.

2. The installation for measuring high range industrial parts, according to claim 1, **characterised in that** the second display screen (5) is wirelessly connected to the first display screen (4).

3. The installation for measuring high range industrial parts, according to any one of the preceding claims, **characterised in that** the second display screen (5) comprises fastening means that enable the second display screen (5) to be coupled to the user who is measuring the part (1).

4. The installation for measuring high range industrial parts, according to any one of the preceding claims, **characterised in that** the second display screen (5) forms part of a common electronic device, i.e., a mobile phone, a Tablet or a PDA.
